Europäisches Patentamt

(19) European Patent Office

Office européen des brevets

(11) EP 0 711 699 A2

(12) EUROPEAN PATENT APPLICATION

(43) Date of publication:
15.05.1996 Bulletin 1996/20

(51) Int. Cl.⁶: B62D 7/15, B62D 15/02

(21) Application number: 95116814.5

(22) Date of filing: 25.10.1995

(84) Designated Contracting States:
DE FR GB

(30) Priority: 09.11.1994 JP 301506/94

(71) Applicant: TOYOTA JIDOSHA KABUSHIKI KAISHA
Aichi-ken 471 (JP)

(72) Inventor: Uehara, Yasuo,
c/o Toyota Jidosha K. K.
Aichi-ken, 471 (JP)

(74) Representative: Pellmann, Hans-Bernd, Dipl.-Ing.
Patentanwaltsbüro
Tiedtke-Bühling-Kinne & Partner
Bavariaring 4
80336 München (DE)

(54) **Apparatus and method for determining the yaw rate of a vehicle**

(57) The apparatus and method of the present invention improves precision of measuring a yaw rate by mutually making up for a drawback of a yaw rate sensor for directly measuring the yaw rate and a drawback of a structure for estimating the yaw rate. An estimated yaw rate operation element (51) gives an estimated yaw rate γe based on a steering angle θf of front wheels, a vehicle speed V, a left front wheel speed vFL, and a right front wheel speed vFR measured by respective sensors (41-47). A low-pass filter (53) eliminates a high frequency component included in the signal of estimated yaw rate γe, while a high-pass filter (55) eliminates a low frequency component included in a signal of measured yaw rate gs measured by a yaw rate sensor (49). An adder (57) compounds an output signal of the low-pass filter (53) with an output signal of the high-pass filter (55). A resulting yaw rate output from the adder (57) includes a component of the estimated yaw rate γe in a low frequency domain where the yaw rate sensor has large or serious measurement errors due to a zero-point drift or the like, and a component of the measured yaw rate gs in a high frequency domain where the estimated yaw rate has large or serious estimation errors.

Fig. 3

## Description

## BACKGROUND OF THE INVENTION

### Field of the Invention

The present invention relates to an apparatus for measuring a quantity of predetermined state related to a vehicle, for example, an angular velocity of the vehicle in a direction of vertical axis or yaw rate, and also to a method of the same.

### Description of the Related Art

A known apparatus for controlling motions of a vehicle steers rear wheels according to the yaw rate as disclosed in JAPANESE PATENT LAID-OPEN GAZETTE No. H-4-228372. The driving performance of the vehicle controlled by such an apparatus is significantly affected by the precision of a measuring apparatus applied for measuring the yaw rate.

A typical measuring apparatus is a yaw rate sensor for directly measuring the yaw rate with a vibrating gyro or the like. Another apparatus proposed in JAPANESE PATENT LAID-OPEN GAZETTE No. H-4-235312 estimates the yaw rate based on measurement signals of sensors other than the yaw rate sensor, for example, left and right wheel speed sensors.

The yaw rate sensor tends to have a problem of zero-point drift due to a variation in temperature or the like. Recent mass-produced, relatively low-cost sensors are especially not free from this problem. Namely the yaw rate sensor has large or serious measurement errors in a low frequency domain.

The structure of estimating the yaw rate from measurement signals of sensors other than the yaw rate sensor only indirectly measures the yaw rate and is not free from estimation errors. This structure especially has large or serious estimation errors in a high frequency domain.

Similar problems arise in a system for measuring a quantity of state other than the yaw rate, for example, lateral acceleration. A method of directly measuring a certain quantity of state with a sensor and a method of estimating the certain quantity of state based on another quantity of state generally have lower precision in different frequency domains.

## SUMMARY OF THE INVENTION

The object of the present invention is thus to improve precision of measuring a quantity of predetermined state over a wide frequency domain by mutually making up for a drawback of a sensor for directly measuring the quantity of predetermined state and a drawback of a structure for estimating the quantity of predetermined state from a quantity of another state.

The above and the other related objects are realized by an apparatus mounted on a vehicle for measuring a quantity of a first state related to the vehicle. The apparatus comprises:

a sensor for directly measuring a quantity of the first state and generating a first output representing the measured quantity of the first state;

estimation means for estimating the quantity of the first state from a quantity of a second state related to the vehicle and generating a second output representing the estimated quantity of the first state; and

selection means for selecting one of the first and second outputs according to frequencies of the first and second outputs, thereby producing a third output representing the quantity of the first state.

The apparatus of this structure selects a component of frequency domain having a high precision from the output of the sensor and another component of frequency domain having a high precision from the output of the estimation means, thereby allowing the quantity of predetermined state to be measured at high precision over a wide frequency domain.

The selection means preferable comprises means for selecting the first output in a low frequency domain of lower than a predetermined frequency and selecting the second output in a high frequency domain of higher than the predetermined frequency.

When the estimation means has a high precision in a low frequency domain and the sensor has a high precision in a high frequency domain, this structure selects a high-precision component of low frequency domain from the output of the estimation means and a high-precision component of high frequency domain from the output of the sensor, thereby allowing the quantity of determined state to be measured at high precision both in the low frequency domain and in the high frequency domain.

The quantity of the first state is preferably a yaw rate of the vehicle.

The apparatus thus constructed selects a component of frequency domain having a high precision from the output of the sensor and another component of frequency domain having a high precision from the output of the estimation means, thereby allowing the yaw rate to be measured at high precision over a wide frequency domain.

According to a preferable structure, the selection means comprises:

a low-pass filter for extracting a low frequency component, whose frequency is lower than a predetermined first frequency, from the output of the estimation means;

a high-pass filter for extracting a high frequency, whose frequency is higher than the first frequency, from the output of the sensor; and

filter output compound means for compounding the low frequency component with the high frequency component to generate the third output.

The predetermined first frequency is preferably in a range of about 0.005 through about 0.01 [Hz].

The estimation means gives the estimated yaw rate of high precision in a low frequency domain, whereas the sensor gives the measured yaw rate of high precision in a high frequency domain. The filter output compound means thus compounds a low frequency component of the output of the estimation means having a high precision with a high frequency component of the sensor output having a high precision. The output of the sensor is applied for the high frequency domain where the estimation means has large or serious errors, whereas the output of the estimation means is applied for the low frequency domain where the sensor has large or serious errors. This structure accordingly allows the yaw rate to be measured at high precision over a wide frequency domain.

It is preferable that the selection means further comprises a third filter for extracting a predetermined frequency component, whose frequency is lower than a predetermined second frequency, higher than the first frequency, from the third output.

According to another preferable structure, the estimation means comprises:

a program memory for storing a software program; and

a microprocessor for executing the software program to estimate the yaw rate.

Alternatively, the estimation means may comprise:

a steering sensor for measuring a steering angle of a steering wheel on the vehicle;

a vehicle speed sensor for measuring a vehicle speed;

a wheel speed sensor for measuring a wheel speed; and

yaw rate estimation means for estimating the yaw rate based on the measured steering angle, the measured vehicle speed, and the measured wheel speed.

In this structure, it is further preferable that the estimation means further comprises:

road surface condition sensor for measuring a road surface condition; and

yaw rate correction means for correcting the estimated yaw rate based on the measured road surface condition.

According to another aspect of the invention, an apparatus mounted on a vehicle comprising:

a yaw rate sensor for directly measuring a yaw rate of the vehicle and generating a first output representing the measured yaw rate;

estimation means for estimating the yaw rate from a quantity of state other than the yaw rate and generating a second output representing the estimated yaw rate;

selection means for selecting one of the first and second outputs according to frequencies of the first and second outputs, thereby producing a third output representing the yaw rate;

rear wheel steering means for steering rear wheels of the vehicle; and

control means for driving the rear wheel steering means in response to the third output.

The present invention is also directed to a method applied to a vehicle for measuring a quantity of predetermined state related to the vehicle. The method comprises the steps of:

(a) directly measuring a quantity of the first state and generating a first output representing the measured quantity of the first state;

(b) estimating the quantity of the first state from a quantity of a second state related to the vehicle and generating a second output representing the estimated quantity of the first state; and

(c) selecting one of the first and second outputs according to frequencies of the first and second outputs, thereby producing a third output representing the quantity of the first state.

The quantity of the first state is preferably a yaw rate of the vehicle.

According to another aspect of the invention, a method applied to a vehicle comprises the steps of:

(d) directly measuring a yaw rate of the vehicle and generating a first output representing the measured yaw rate;

(e) estimating the yaw rate from a quantity of state other than the yaw rate and generating a second output representing the estimated yaw rate;

(f) selecting one of the first and second outputs according to frequencies of the first and second outputs, thereby producing a third output representing the yaw rate;

(g) steering rear wheels of the vehicle; and

(h) driving the rear wheel steering executed in the step (g) in response to the third output.

These and other objects, features, aspects, and advantages of the present invention will become more apparent from the following detailed description of the preferred embodiments with the accompanying drawings.

## BRIEF DESCRIPTION OF THE DRAWINGS

Fig. 1 schematically illustrates structure of a rear wheel steering apparatus with a measuring device as a first embodiment according to the invention;

Fig. 2 is a block diagram showing an electrical structure of the rear wheel steering apparatus of Fig. 1;

Fig. 3 is a block diagram illustrating a detailed structure of the yaw rate operation unit 50 connecting with various sensors;

Fig. 4 is a vertical cross sectional view illustrating a detailed structure of the rear wheel steering actuator 35;

Fig. 5 is a flowchart showing a rear wheel steering control routine executed by the 4WS-ECU 40;

Fig. 6 is a graph showing the variable K1 plotted against the vehicle speed V;

Fig. 7 is a graph showing the variable K2 plotted against the vehicle speed V;

Fig. 8 is a flowchart showing a yaw rate operation routine for calculating an actual yaw rate $\gamma$ executed in a second embodiment according to the invention; and

Fig. 9 is a block diagram illustrating a detailed structure of another yaw rate operation unit 350 connecting with various sensors as a third embodiment according to the invention.

## DESCRIPTION OF THE PREFERRED EMBODIMENT

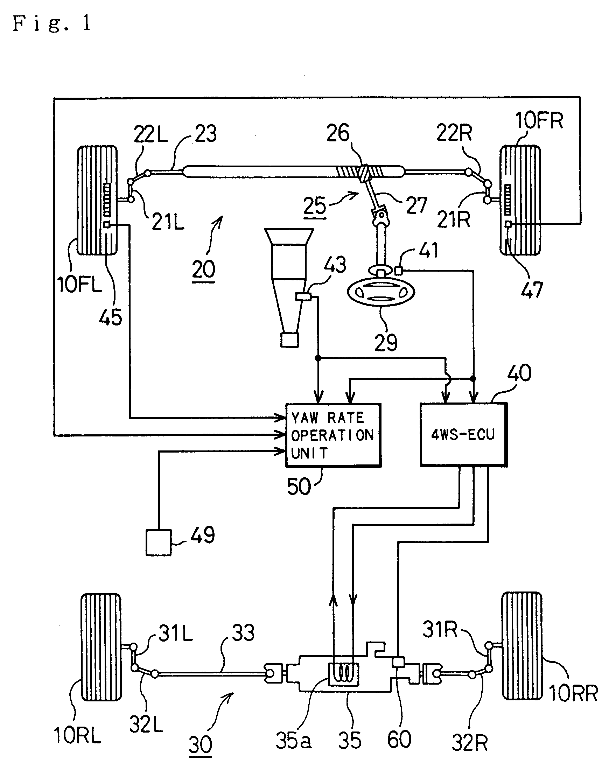

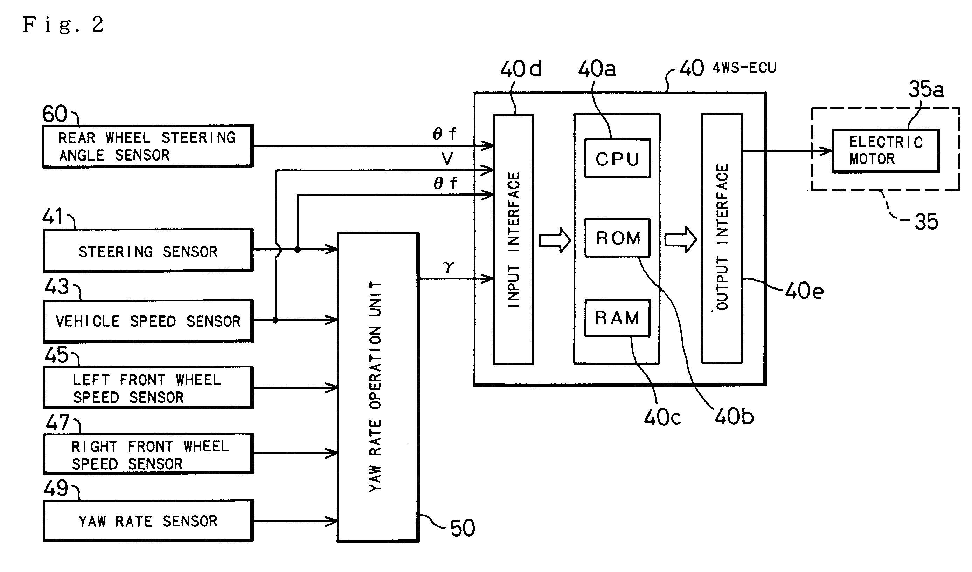

Fig. 1 schematically illustrates structure of a rear wheel steering apparatus with a measuring device as a first embodiment according to the invention, and Fig. 2 is a block diagram showing an electrical structure of the rear wheel steering apparatus of Fig. 1.

The rear wheel steering apparatus of the first embodiment includes a front wheel steering mechanism 20 for connecting a right front wheel 10FR of a vehicle with a left front wheel 10FL thereof, and a rear wheel steering mechanism 30 for connecting a right rear wheel 10RR with a left rear wheel 10RL as shown in Fig. 1.

The front wheel steering mechanism 20 is provided with a pair of knuckle arms 21L and 21R, a pair of tie rods 22L and 22R, and a relay rod 23 for interconnecting the tie rods 22L and 22R. A rack and pinion steering mechanism 25 is coupled with the relay rod 23, where a pinion 26 of the steering mechanism 25 is linked with a steering wheel 29 via a shaft 27.

Clockwise or counterclockwise rotation of the steering wheel 29 activates the steering mechanism 25 to shift the relay rod 23 to the left or to the right (in the drawing of Fig. 1) and to rotate the knuckle arms 21L and 21R by an amount corresponding to a steering angle of the steering wheel 29, thereby driving the front wheels 10FL and 10FR to the right or to the left.

Like the front wheel steering mechanism 20, the rear wheel steering mechanism 30 is provided with a pair of knuckle arms 31L and 31R, a pair of tie rods 32L and 32R, and a relay rod 33 for interconnecting the tie rods 32L and 32R. A rear wheel steering actuator 35 is mounted in the middle of the relay rod 33 of the rear wheel steering mechanism 30. The rear wheel steering actuator 35 transmits electric signals output from an electronic control unit 40 for steering four wheels (hereinafter referred to as 4WS-ECU) to an internal electric motor 35a, so as to shift the relay rod 33 to the left or to the right (in the drawing of Fig. 1). The leftward or rightward displacement of the relay rod 33 rotates the knuckled arms 31L and 31R and thereby drives the rear wheels 10RL and 10RR to the right or to the left. Detailed structure of the rear wheel steering actuator 35 will be described later.

The vehicle is also provided with a plurality of sensors for measuring the quantities of various states of the vehicle; for example, a steering sensor 41 for measuring a front wheel steering angle $\theta f$ of the steering wheel 29, a vehicle speed sensor 43 for measuring a vehicle speed V, a left front wheel speed sensor 45 for measuring a speed vFL of the left front wheel 10 FL, a right front wheel speed sensor 47 for measuring a speed vFR of the right front wheel 10FR, and a yaw rate sensor 49 with a vibrating gyro for measuring a yaw rate. The steering sensor 41 and the yaw rate sensor 49 have positive values in response to clockwise rotations from their respective neutral positions. The sensors 41 through 49 are connected to a yaw rate operation unit 50, which calculates a yaw rate based on output signals from these sensors 41 through 49. The yaw rate measured by the yaw rate sensor 49 is hereinafter referred to as the measured yaw rate $\gamma s$, and the yaw rate calculated by the yaw rate operation unit 50 is as the actual yaw rate $\gamma$.

The steering sensor 41 and the vehicle speed sensor 43 are also connected with the 4WS-ECU 40, which receives output signals of the yaw rate operation unit 50.

The vehicle further includes a rear wheel steering angle sensor 60, which is mounted on the rear wheel steering actuator 35 and measures a stroke of the relay rod 33 in order to determine a rear wheel steering angle $\theta r$ indirectly.

The rear wheel steering angle sensor 60 has positive values in response to clockwise rotation from its neutral position, and is connected with the 4WS-ECU 40.

The 4WS-ECU 40 is constructed as a logic operation circuit including a microcomputer as shown in Fig. 2. More concretely, the 4WS-ECU 40 includes: a CPU 40a for executing a variety of operations according to preset control programs in order to control the quantity of rear wheel steering; a ROM 40b in which control programs and control data required for the execution of various operations by the CPU 40a are previously stored; a RAM 40c which various data required for the execution of various operations by the CPU 40a are temporarily written in and read from; an input interface 40d for receiving various data including the front wheel steering angle θf measured by the steering sensor 41, the vehicle speed V by the vehicle speed sensor 43, the rear wheel steering angle θr by the rear wheel steering angle sensor 60, and the actual yaw rate γ calculated by the yaw rate operation unit 50; and an output interface 40e for outputting electric signals to the electric motor 35a of the rear wheel steering actuator 35 based on the results of operations by the CPU 40a.

The 4WS-ECU 40 thus constructed controls the rear wheel steering angle based on the actual yaw rate γ calculated by the yaw rate operation unit 50.

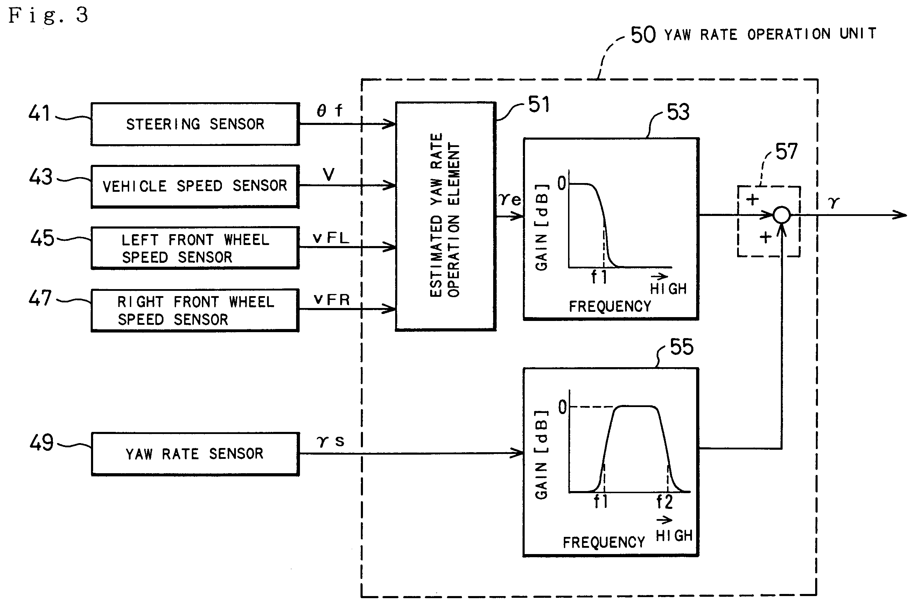

Fig. 3 is a block diagram illustrating a detailed structure of the yaw rate operation unit 50 connecting with the various sensors.

The yaw rate operation unit 50 includes an estimated yaw rate operation element 51, a low-pass filter 53, a high-pass filter 55, and an adder 57. The estimated yaw rate operation element 51 receives the front wheel steering angle θf measured by the steering sensor 41, the vehicle speed V by the vehicle speed sensor 43, and the left and right front wheel speeds vFL and vFR by the left and right front wheel speed sensors 45 and 47, and transmits an output signal (estimated yaw rate) γe to the low-pass filter 53. The high-pass filter 55 receives the measured yaw rate γs measured by the yaw rate sensor 49. The adder 57 eventually compounds an output signal of the low-pass filter 53 with an output signal of the high-pass filter 55.

The estimated yaw rate operation element 51 gives an estimated yaw rate γe based on the various data sent from the sensors other than the yaw rate sensor; that is, the front wheel steering angle θf from the steering sensor 41, the vehicle speed V from the vehicle speed sensor 43, and the left and right front wheel speeds vFL and vFR from the left and right front wheel speed sensors 45 and 47 in this embodiment. In a concrete procedure, the estimated yaw rate operation element 51 calculates an intermediate yaw rate γe* according to Equation (1) given below, and corrects the intermediate yaw rate γe* with a difference between the right front wheel speed and the left front wheel speed (vFR-vFL) according to Equation (2) given below:

$$\gamma e^* = \frac{1}{1 + A \cdot V^2} \cdot \frac{V}{L} \cdot \frac{1}{N} \cdot \frac{1 + \dfrac{m \cdot Lf \cdot V}{2 \cdot L \cdot Kr} s}{1 + \dfrac{2 \cdot \zeta \cdot s}{\omega n} + \dfrac{s^2}{\omega n^2}} \cdot \theta f \qquad (1)$$

where $\omega n$ denotes the resonance frequency of a vehicle, $\zeta$ the damping coefficient of the vehicle, m the weight of the vehicle, I the moment of inertia of the vehicle, Kr a rear-wheel cornering power, L a wheel base, Lf a front wheel base (distance between the front-wheel axle and the center of gravity), A a stability factor, N a steering gear ratio, and s the Laplace operator;

$$\gamma e = (vFR-vFL) \cdot A \cdot \gamma e^* \qquad (2)$$

where A represents a constant.

Correction of the intermediate yaw rate γe* calculated by Equation (1) with the difference between the right and left front wheel speeds (vFR-vFL) allows the estimated yaw rate γe to be determined by considering the road surface condition represented by the wheel speed difference (vFR-vFL).

The low-pass filter 53 eliminates a high frequency component included in the signal of estimated yaw rate γe, and has frequency characteristics as shown by the graph of Fig. 3. This graph clearly shows that the gain is substantially kept high up to a predetermined frequency f1 (in a range of 0.005 through 0.01 [Hz] or preferably 0.005 [Hz] in this embodiment) and abruptly decreases after the predetermined frequency f1. The low-pass filter 53 having such frequency characteristics eliminates substantially all the frequency components of not less than the predetermined frequency f1.

The high-pass filter 55, on the other hand, eliminates a low frequency component included in the signal of measured yaw rate γs, and has frequency characteristics as shown by the graph of Fig. 3. This graph clearly shows that the gain is substantially kept low in a frequency domain of not greater than the predetermined frequency f1, abruptly increases after the predetermined frequency f1, and abruptly decreases after another frequency f2 higher than the predetermined frequency f1 (in a range of 2 through 9 [Hz] or preferably 8 [Hz] in this embodiment). The high-pass filter 55 having such frequency characteristics eliminates substantially all the frequency components of not greater than the predetermined frequency f1 and of not less than the higher frequency f2.

The adder 57 compounds an output signal of the low-pass filter 53 with that of the high-pass filter 55, so as to give a resulting yaw rate including a low frequency component of not greater than the predetermined frequency f1 estimated by the estimated yaw rate operation element 51 and a frequency component in a range of the predetermined frequency f1 to the higher frequency f2 measured by the yaw rate sensor 49. The result of compound is output as the actual yaw rate γ from the yaw rate operation unit 50 and transmitted to the 4WS-ECU 40.

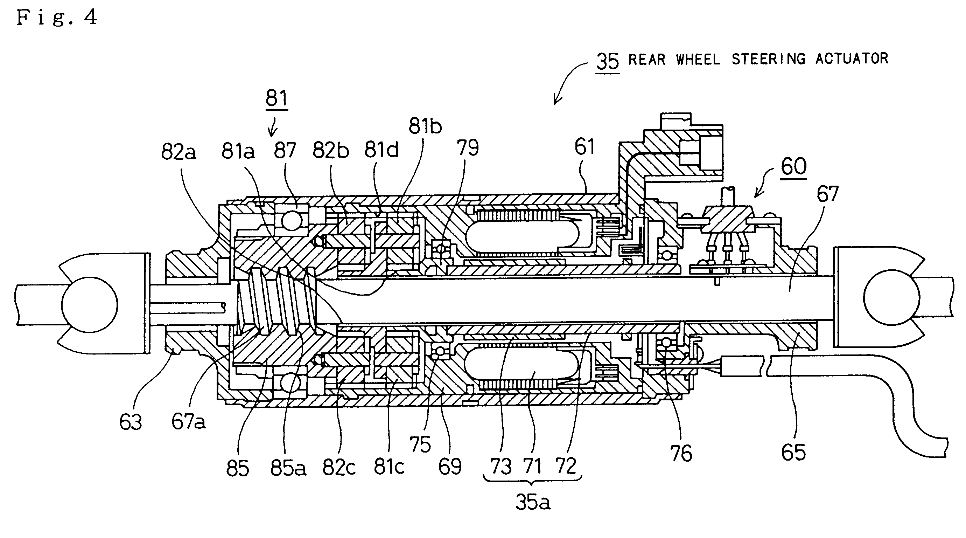

Fig. 4 is a vertical cross sectional view illustrating a detailed structure of the rear wheel steering actuator 35.

The rear wheel steering actuator 35 includes a cylindrical casing 61, bearing members 63 and 65 attached to either end of the casing 61, and an actuator shaft 67 disposed in and running through the casing 61 via the bearing members 63 and 65.

The electric motor 35a is attached to inner wall of the casing 61 via a resin support member 69. The electric motor 35a includes a coil 71 functioning as a stator directly secured to the support member 69, a cylindrical iron rotor member 72 working as a rotor, and a cylindrical permanent magnet 73 attached to the circumference of the rotor member 72. Bearings 75 and 76 disposed on either end of the rotor member 72 work to secure the rotor member 72 and the permanent magnet 73 to the support member 69 in such a manner as to allow rotations of the rotor member 72 with the permanent magnet 73.

A power transmission member 79 is fixed to one end of the rotor member 72 to be arranged coaxial with the rotor member 72. A sun gear 81a of a planetary gear mechanism 81 is disposed on the circumference of the power transmission member 79. The planetary gear mechanism 81 includes two sets of planetary gears linked in series. A first set of planetary gear includes the sun gear 81a, four planet gears 81b and 81c (other two are omitted and not shown in Fig. 4), and a ring gear 81d, whereas a second set of planetary gear includes a sun gear 82a, four planet gears 82b and 82c (other two are omitted and not shown in Fig. 4), and the ring gear 81d (in common with the first set).

A nut 85 is linked with a shaft of the four planet gears 82b and 82c of the second set of planetary gear. The nut 85 is attached to inside wall of the casing 61 via a bearing 87 in such a manner as to allow rotations about the axis but prevent a movement along the axis. The nut 85 has an internal screw thread 85a, which engages with a mating trapezoidal screw thread 67a cut upon the actuator shaft 67. A rotation of the nut 85 shifts the internal screw thread 85a in the axial direction to move the mating trapezoidal screw thread 67a engaging with the internal screw thread 85a, thereby shifting the actuator shaft 67 in the axial direction. The nut 85 and the mating trapezoidal screw thread 67a accordingly work to convert rotations of the planetary gear mechanism 81 to linear movements of the actuator shaft 67.

When an electric signal is transmitted from the 4WS-ECU 40 to the electric motor 35a of the rear wheel steering actuator 35, the electric motor 35a rotates the planetary gear mechanism 81, which results in a linear movement of the actuator shaft 67 in the axial direction as described above. Since the actuator shaft 67 is coupled with the relay rod 33 of the rear wheel steering mechanism 30, the relay rod 33 shifts to the left or to the right (in the drawing of Fig. 1), so as to drive the rear wheels 10RL and 10RR to the right or to the left. The steering angle of the rear wheels 10RL and 10RR is determined depending upon the magnitude of electric signal output from the 4WS-ECU 40.

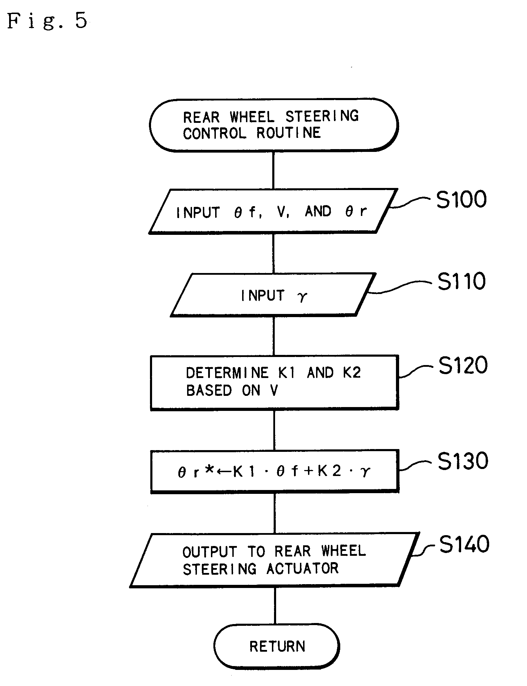

Fig. 5 is a flowchart showing a rear wheel steering control routine executed by the 4WS-ECU 40. The rear wheel steering control routine is repeatedly executed at predetermined time intervals after the vehicle starts driving in response to a power supply. All variables and flags are set to initial values through an initialization process immediately after the power supply.

When the program enters the rear wheel steering control routine of Fig. 5, the CPU 40a receives output signals of the steering sensor 41, the vehicle speed sensor 45, and the rear wheel steering angle sensor 60 via the input interface 40d, and stores these output signals into the RAM 40c as a steering angle θf of the front wheels 10FL and 10FR, a vehicle speed V, and a steering angle θr of the rear wheels 10RL and 10RR at step S100. The CPU 40a then receives an output signal of the yaw rate operation unit 50 via the input interface 40d and stores the output signal as an actual yaw rate γ into the RAM 40c at step S110.

The program subsequently proceeds to step S120, at which the CPU 40a determines variables K1 and K2 based on the vehicle speed V. A map A representing a correlation of the vehicle speed V with the variable K1 and a map B representing a correlation of the vehicle speed V with the variable K2 are previously stored in the ROM 40b of the 4WS-ECU 40. According to a concrete procedure of step S120, the CPU 40a determines the variable K1 by checking the vehicle speed V input at step S100 against the map A and the variable K2 by checking the vehicle speed V against the map B.

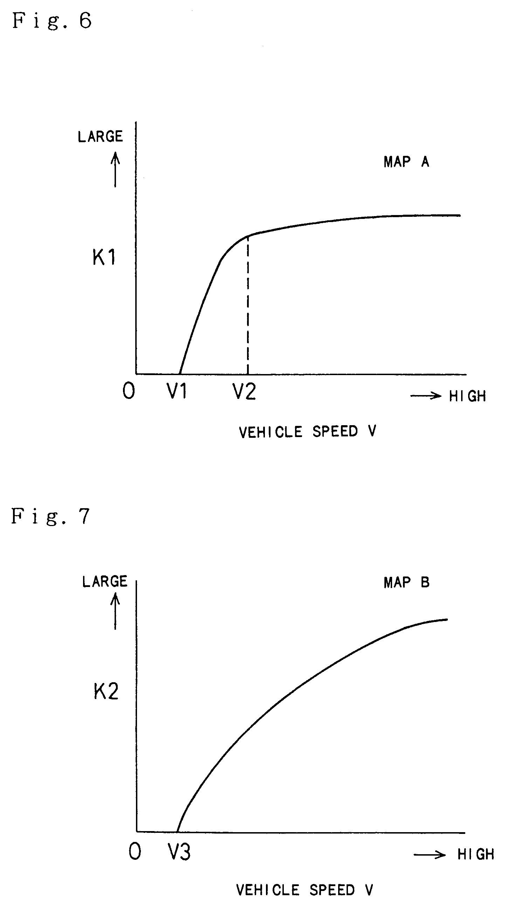

Fig. 6 shows an example of the map A, which shows that the variable K1 is equal to the value '0' at the vehicle speed V of not greater than a predetermined first value V1 (for example, 10 [km/h]), abruptly increases in a vehicle speed range between the predetermined first value V1 and a predetermined second value V2 (for example, 30 [km/h]), and gradually increases at the vehicle speed V of greater than the predetermined second value V2. Fig. 7 shows an example of the map B, which shows that the variable K2 is equal to the value '0' at the vehicle speed V of not greater than a predetermined value V3 (for example, 10 [km/h]) and gradually increases at the vehicle speed V of greater than the predetermined value V3. The variable K1 corresponds to a gain applied to the steering angle θf of front wheels in calculation of a target steering angle θr* of rear wheels, while the variable K2 corresponds to a gain applied to the yaw rate γ.

The program then proceeds to step S130 in the flowchart of Fig. 5, at which the CPU 40a determines the target steering angle θr* of rear wheels. In a concrete procedure of step S130, the CPU 40a calculates the target steering angle θr* of rear wheels from the front wheel steering angle θf and the actual yaw rate γ input at steps S100 and S110 and the variables K1 and K2 determined at step S120 according to Equation (3) given below:

$$\theta r^* = K1 \cdot \theta f + K2 \cdot \gamma \tag{3}$$

After the calculation of the target steering angle θr* of rear wheels at step S130, the program goes to step S140, at which the CPU 40a transmits a voltage signal via the output interface 40e to the electric motor 35a of the rear wheel steering actuator 35, in order to make the rear wheel steering angle θr equal to the target steering angle θr* based on the difference between the target steering angle θr* calculated at step S130 and the rear wheel steering angle θr input at step S100. The transmission of a voltage signal drives the rear wheels 10RL and 10RR to the target steering angle θr*. The program then goes to RETURN and exits from the routine.

The structure of the first embodiment determines the actual yaw rate γ including a high frequency component of the measured yaw rate γs measured by the yaw rate sensor 49 and a low frequency component of the estimated yaw rate γe given by the estimated yaw rate operation element 51. The measured yaw rate γs measured by the yaw rate sensor 49 makes large or serious measurement errors in a low frequency domain but has a high precision in a high frequency domain. The estimated yaw rate γe given by the estimated yaw rate operation element 51, on the other hand, makes large or serious estimation errors in a high frequency domain but has a high precision in a low frequency domain. The actual yaw rate γ thus determined has a high precision both in a low frequency domain and a high frequency domain. The first embodiment thus effectively improves precision of measuring the yaw rate, which leads to an increase in precision of controlling the rear wheel steering, thereby enhancing the driving performance of the vehicle.

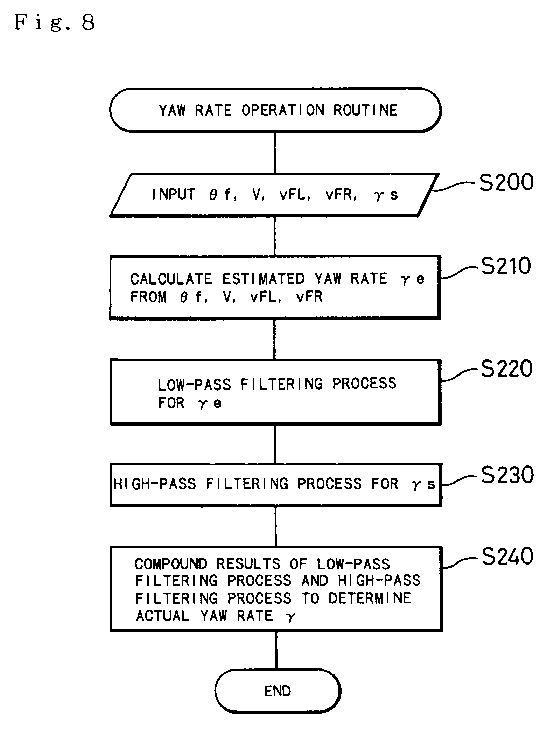

Although the yaw rate operation unit 50 is constructed as a discrete electronic circuit in the first embodiment, the yaw rate operation unit 50 may be constructed as an electronic control unit (not shown) like the 4WS-ECU 40, as given in a second embodiment according to the invention. Fig. 8 is a flowchart showing a yaw rate operation routine executed by the electronic control unit in the second embodiment.

When the program enters the yaw rate operation routine of Fig. 8, a CPU (not shown) of the electronic control unit receives, at step S200, the steering angle θf of front wheels, the vehicle speed V, the left front wheel speed vFL, the right front wheel speed vFR, and the measured yaw rate γs respectively measured by the steering sensor 41, the vehicle speed sensor 43, the left front wheel speed sensor 45, the right front wheel speed sensor 47, and the yaw rate sensor 49.

The CPU then calculates an estimated yaw rate γe from the front wheel steering angle θf, the vehicle speed V, and the left and right front wheel speeds vFL and vFR at step S210. In a concrete procedure of step S210, the CPU calculates an intermediate yaw rate γe* from the quantity-of-states θf, V, vFL, and vFR according to Equation (1) given above, and corrects the intermediate yaw rate γe* according to Equation (2) given above to give an estimated yaw rate γe.

After the calculation of the estimated yaw rate γe at step S210, the program goes to step S220, at which the estimated yaw rate γe undergoes a low-pass filtering process. The low-pass filtering process eliminates a high frequency component included in the signal of estimated yaw rate γe and is realized by the operation of the CPU according to the registered software.

At step S230, the measured yaw rate γs input at step S200 undergoes a high-pass filtering process. The high-pass filtering process eliminates a low frequency component included in the signal of measured yaw rate γs and is realized by the operation of the CPU according to the registered software.

The program proceeds to step S240, at which the CPU compounds the result of low-pass filtering process at step S220 with the result of high-pass filtering process at step S230 to determine an actual yaw rate γ. The program then goes to END and exits from the routine.

The system of the second embodiment thus constructed realizes the functions of the yaw rate operation unit 50 in the first embodiment by the structure of electronic control unit and the processing executed by the electronic control unit, thus allowing the yaw rate to be measured at a high precision like the first embodiment. The second embodiment realizing the effect of the yaw rate operation unit 50 by the structure of electronic control unit and the processing executed by the electronic control unit desirably simplifies the structure of the whole system.

According to one possible modification, the yaw rate operation unit 50 is omitted from the system of the first embodiment, where the 4WS-ECU 40 receives all the output signals from sensors and executes the yaw rate operation routine described in the second embodiment to calculate the actual yaw rate γ. This modified structure does not require any hardware for the yaw rate operation unit 50, thus allowing further simplification.

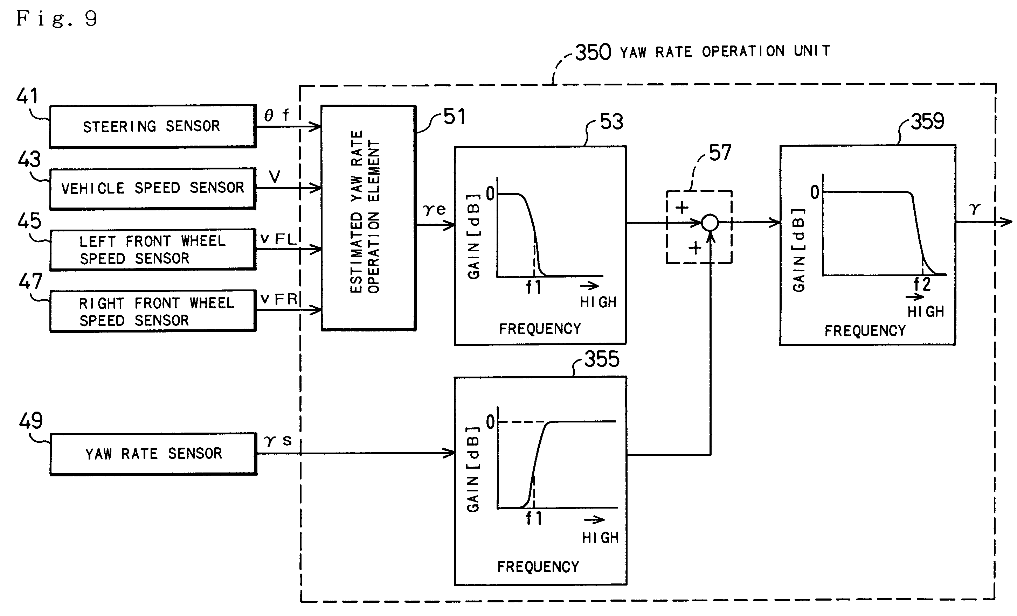

Fig. 9 is a block diagram illustrating a detailed structure of another yaw rate operation unit 350 connecting with various sensors as a third embodiment according to the invention. The third embodiment has an identical structure to that of the first embodiment, except the yaw rate operation unit 350. The yaw rate operation unit 350 of the third embodiment is constructed as a discrete electronic circuit like the yaw rate operation unit 50 of the first embodiment, and includes a high-pass filter 355 and a third filter 359 other than the estimated yaw rate operation element 51, the low-pass filter 53, and the adder 57 of the first embodiment.

The high-pass filter 355 receives the measured yaw rate $\gamma s$ measured by the yaw rate sensor 49 and has frequency characteristics as shown by the graph of Fig. 9, which clearly shows that the gain is substantially kept low in a frequency domain of not greater than a predetermined frequency f1 and abruptly increases after the predetermined frequency f1. The high-pass filter 355 having such frequency characteristics eliminates substantially all the frequency components of not greater than the predetermined frequency f1.

The adder 57 compounds an output signal of the high-pass filter 355 with an output signal of the low-pass filter 53, and transmits a resulting compound signal to the third filter 359 having frequency characteristics as shown by the graph of Fig. 9. This graph clearly shows that the gain is substantially kept high up to a predetermined frequency f2 and abruptly decreases after the predetermined frequency f2. The third filter 359 having such frequency characteristics eliminates substantially all the frequency components of not less than the predetermined frequency f2.

In the system of the third embodiment thus constructed, the third filter 359 eliminates a high frequency component of not less than the higher predetermined frequency f2 from the high frequency component of not less than the predetermined frequency f1 selected by the high-pass filter 355. Like the first embodiment, the actual yaw rate $\gamma$ output from the yaw rate operation unit 350 of the third embodiment includes a low frequency component of not greater than the predetermined frequency f1 selected out of the estimated yaw rate $\gamma e$ given by the estimated yaw rate operation element 51, and a high frequency component between the predetermined frequency f1 and the higher frequency f2 selected out of the measured yaw rate $\gamma s$ measured by the yaw rate sensor 49. The actual yaw rate $\gamma$ thus determined in the third embodiment has a high precision both in a low frequency domain and a high frequency domain.

The above embodiments are only illustrative and not restrictive in any sense. There may be many modifications, alterations, and changes without departing from the scope or spirit of essential characteristics of the invention. Some examples of modification are given below.

The estimated yaw rate operation element 51 of the above embodiments gives an estimated yaw rate $\gamma e$ by substituting the steering angle $\theta f$ of front wheels, the vehicle speed V, the left front wheel speed vFL, and the right front wheel speed vFR respectively measured by the steering sensor 41, the vehicle speed sensor 43, the left front wheel speed sensor 45, and the right front wheel speed sensor 47 into Equation (1) given above. In a modified structure, the estimated yaw rate $\gamma e$ may be determined by simple calculation according to Equation (4) given below:

$$\gamma e = D \cdot (vFR-vFL) \tag{4}$$

where D represents a constant.

Multiplication of the difference between the right and left front wheel speeds (vFR-vFL) by the constant D gives a roughly estimated yaw rate $\gamma e$. This simplifies the structure of the estimated yaw rate operation element 51.

Although the yaw rate sensor with a vibrating gyro is used in the above embodiment, the yaw rate sensor may consist of a plurality of lateral G sensors and an arithmetic circuit for calculating a yaw rate from data of these lateral G sensors. In this structure, a frequency domain where the lateral G sensors make large or serious errors is specified previously, and the yaw rate in the specified frequency domain is compensated with data output from sensors other than the lateral G sensors.

The actual yaw rate $\gamma$ may be used not as a parameter input into the rear wheel steering apparatus but as a parameter input into an auxiliary front wheel steering apparatus.

The object measured by the apparatus of the invention is not limited to the yaw rate but may be any quantity of state of the vehicle.

It is substantially impossible to manufacture a yaw rate sensor or another similar sensor having a high precision of measurement over a whole frequency domain of the given quantity of state (object of measurement); that is, such a sensor does not generally have favorable frequency characteristics over an extremely wide frequency domain. The wider frequency domain having favorable frequency characteristics undesirably increases the manufacturing cost. The method of estimating the given quantity of state is based on sensor outputs having other frequency characteristics and can not be free from the known drawback, that is, a low precision in a high frequency domain. This estimation process accordingly does not have a high precision of measurement over a wide frequency domain. The structure of the present invention effectively selects frequency domains of high precision from both the sensor output and the estimation.

The scope and spirit of the present invention are limited only by the terms of the appended claims.

The apparatus and method of the present invention improves precision of measuring a yaw rate by mutually making up for a drawback of a yaw rate sensor for directly measuring the yaw rate and a drawback of a structure for estimating the yaw rate. An estimated yaw rate operation element (51) gives an estimated yaw rate $\gamma e$ based on a steering angle $\theta f$ of front wheels, a vehicle speed V, a left front wheel speed vFL, and a right front wheel speed vFR measured by respective sensors (41-47). A low-pass filter (53) eliminates a high frequency component included in the signal of estimated yaw rate $\gamma e$, while a high-pass filter (55) eliminates a low frequency component included in a signal of measured yaw rate gs measured by a yaw rate sensor (49). An adder (57) compounds an output signal of the low-pass filter (53)

with an output signal of the high-pass filter (55). A resulting yaw rate output from the adder (57) includes a component of the estimated yaw rate $\gamma e$ in a low frequency domain where the yaw rate sensor has large or serious measurement errors due to a zero-point drift or the like, and a component of the measured yaw rate gs in a high frequency domain where the estimated yaw rate has large or serious estimation errors.

## Claims

1. An apparatus mounted on a vehicle for measuring a quantity of a first state related to the vehicle, said apparatus comprising:

    a sensor for directly measuring a quantity of said first state and generating a first output representing the measured quantity of said first state;

    estimation means for estimating the quantity of said first state from a quantity of a second state related to the vehicle and generating a second output representing the estimated quantity of said first state; and

    selection means for selecting one of the first and second outputs according to frequencies of said first and second outputs, thereby producing a third output representing the quantity of said first state.

2. An apparatus in accordance with claim 1, wherein said selection means comprises:

    means for selecting said first output in a low frequency domain of lower than a predetermined frequency and selecting said second output in a high frequency domain of higher than said predetermined frequency.

3. An apparatus in accordance with claim 1, wherein the quantity of said first state is a yaw rate of the vehicle.

4. An apparatus in accordance with claim 3, wherein said selection means comprises:

    a low-pass filter for extracting a low frequency component, whose frequency is lower than a predetermined first frequency, from the output of said estimation means;

    a high-pass filter for extracting a high frequency, whose frequency is higher than said first frequency, from the output of said sensor; and

    filter output compound means for compounding the low frequency component with the high frequency component to generate said third output.

5. An apparatus in accordance with claim 4, wherein said selection means further comprises:

    a third filter for extracting a predetermined frequency component, whose frequency is lower than a predetermined second frequency, higher than said first frequency, from the third output.

6. An apparatus in accordance with claim 3, wherein said estimation means comprises:

    a program memory for storing a software program; and

    a microprocessor for executing said software program to estimate the yaw rate.

7. An apparatus in accordance with claim 3, wherein said estimation means comprises:

    a steering sensor for measuring a steering angle of a steering wheel on said vehicle;

    a vehicle speed sensor for measuring a vehicle speed;

    a wheel speed sensor for measuring a wheel speed; and

    yaw rate estimation means for estimating the yaw rate based on the measured steering angle, the measured vehicle speed, and the measured wheel speed.

8. An apparatus in accordance with claim 7, wherein said estimation means further comprises:

    road surface condition sensor for measuring a road surface condition; and

    yaw rate correction means for correcting said estimated yaw rate based on the measured road surface condition.

9. An apparatus in accordance with claim 4, wherein said predetermined first frequency is a value in a range of about 0.005 through about 0.01 [Hz].

10. An apparatus mounted on a vehicle, comprising:

    a yaw rate sensor for directly measuring a yaw rate of the vehicle and generating a first output representing said measured yaw rate;

    estimation means for estimating the yaw rate from a quantity of state other than the yaw rate and generating a second output representing said estimated yaw rate;

    selection means for selecting one of the first and second outputs according to frequencies of said first and second outputs, thereby producing a third output representing the yaw rate;
rear wheel steering means for steering rear wheels of said vehicle; and
control means for driving said rear wheel steering means in response to said third output.

11. A method applied to a vehicle for measuring a quantity of a first state related to the vehicle, said method comprising the steps of:

(a) directly measuring a quantity of said first state and generating a first output representing the measured quantity of said first state;
(b) estimating the quantity of said first state from a quantity of a second state related to the vehicle and generating a second output representing the estimated quantity of said first state; and
(c) selecting one of the first and second outputs according to frequencies of said first and second outputs, thereby producing a third output representing the quantity of said first state.

12. A method in accordance with claim 11, wherein said step (c) comprises the step of:

(c-1) selecting said first output in a low frequency domain of lower than a predetermined frequency and selecting said second output in a high frequency domain of higher than said predetermined frequency.

13. A method in accordance with claim 11, wherein the quantity of said first state is a yaw rate of the vehicle.

14. A method in accordance with claim 13, wherein said step (c) comprises the steps of:

(c-2) extracting a low frequency component, whose frequency is lower than a predetermined first frequency, from the output estimated said step (b);
(c-3) extracting a high frequency, whose frequency is higher than said first frequency, from the output measured in said step (a); and
(c-4) compounding the low frequency component with the high frequency component to generate said third output.

15. A method in accordance with claim 14, wherein said step (c) further comprises the step of:

(c-5) extracting a predetermined frequency component, whose frequency is lower than a predetermined second frequency , higher than said first frequency, from the third output.

16. A method in accordance with claim 13, wherein said step (b) comprises the step of:

(b-1) estimating the yaw rate by a process executed according to a software program.

17. A method in accordance with claim 13, wherein said step (b) comprises the steps of:

(b-2) measuring a steering angle of a steering wheel on said vehicle;
(b-3) measuring a vehicle speed;
(b-4) measuring a wheel speed; and
(b-5) estimating the yaw rate based on the measured steering angle, the measured vehicle speed, and the measured wheel speed.

18. A method in accordance with claim 17, wherein said step (b) further comprises the steps of:

(b-6) measuring a road surface condition; and
(b-7) correcting said estimated yaw rate based on the measured road surface condition.

19. A method in accordance with claim 14, wherein said predetermined first frequency is a value in a range of about 0.005 through about 0.01 [Hz].

20. A method applied to a vehicle, comprising the steps of:

(d) directly measuring a yaw rate of the vehicle and generating a first output representing said measured yaw rate;

(e) estimating the yaw rate from a quantity of state other than the yaw rate and generating a second output representing said estimated yaw rate;

(f) selecting one of the first and second outputs according to frequencies of said first and second outputs, thereby producing a third output representing the yaw rate;

(g) steering rear wheels of said vehicle; and

(h) driving said rear wheel steering executed in said step (g) in response to said third output.

Fig. 1

Fig. 2

EP 0 711 699 A2

Fig. 3

EP 0 711 699 A2

Fig. 4

EP 0 711 699 A2

35 REAR WHEEL STEERING ACTUATOR

Fig. 5

```
        ┌─────────────────────────┐
        │   REAR WHEEL STEERING    │
        │   CONTROL ROUTINE        │
        └─────────────────────────┘
                     │
        ┌─────────────────────────┐
       /   INPUT θf, V, AND θr    /──── S100
      └─────────────────────────┘
                     │
        ┌─────────────────────────┐
       /        INPUT γ           /──── S110
      └─────────────────────────┘
                     │
        ┌─────────────────────────┐
        │   DETERMINE K1 AND K2    │──── S120
        │   BASED ON V             │
        └─────────────────────────┘
                     │
        ┌─────────────────────────┐
        │  θr*←K1·θf+K2·γ          │──── S130
        └─────────────────────────┘
                     │
        ┌─────────────────────────┐
       /   OUTPUT TO REAR WHEEL   /──── S140
      /    STEERING ACTUATOR     /
      └─────────────────────────┘
                     │
        ┌─────────────────────────┐
        │        RETURN            │
        └─────────────────────────┘
```

Fig. 6

Fig. 7

Fig. 8

```
┌─────────────────────────────────────┐
│      YAW RATE OPERATION ROUTINE      │
└─────────────────────────────────────┘
                    │
┌───────────────────────────────────┐
│   INPUT θf, V, vFL, vFR, γs       │──── S200
└───────────────────────────────────┘
                    │
┌───────────────────────────────────┐
│  CALCULATE ESTIMATED YAW RATE γe  │──── S210
│  FROM θf, V, vFL, vFR             │
└───────────────────────────────────┘
                    │
┌───────────────────────────────────┐
│   LOW-PASS FILTERING PROCESS      │──── S220
│   FOR γe                          │
└───────────────────────────────────┘
                    │
┌───────────────────────────────────┐
│ HIGH-PASS FILTERING PROCESS FOR γs│──── S230
└───────────────────────────────────┘
                    │
┌───────────────────────────────────┐
│  COMPOUND RESULTS OF LOW-PASS     │──── S240
│  FILTERING PROCESS AND HIGH-PASS  │
│  FILTERING PROCESS TO DETERMINE   │
│  ACTUAL YAW RATE γ                │
└───────────────────────────────────┘
                    │
              ┌──────────┐
              │   END    │
              └──────────┘
```

# Fig. 9

350 YAW RATE OPERATION UNIT

41 STEERING SENSOR → θf
43 VEHICLE SPEED SENSOR → V
45 LEFT FRONT WHEEL SPEED SENSOR → vFL
47 RIGHT FRONT WHEEL SPEED SENSOR → vFR

51 ESTIMATED YAW RATE OPERATION ELEMENT → γe

53 GAIN[dB] 0 — f1 HIGH — FREQUENCY

57 + +

359 GAIN[dB] 0 — f2 HIGH — FREQUENCY → γ

355 GAIN[dB] 0 — f1 HIGH — FREQUENCY

49 YAW RATE SENSOR → γs

EP 0 711 699 A2